# EUROPÄISCHE PATENTANMELDUNG

(11) **EP 0 835 991 A2**
(43) Veröffentlichungstag der Anmeldung: **15.04.1998**
(21) Anmeldenummer: 97116124.5
(22) Anmeldetag: 17.09.1997
(51) Int. Cl.: F01P 5/10, F02B 63/06

(54) **Antriebseinheit, insbesondere für ein Kraftfahrzeug**

(30) Priorität: 08.10.1996 DE 19641450
(71) Anmelder: Voith Turbo GmbH & Co. KG, 89522 Heidenheim (DE); MAN Nutzfahrzeuge Aktiengesellschaft, 80995 München (DE)
(72) Erfinder: Edelmann, Peter, 89522 Heidenheim (DE); Rose, Peter, 89522 Heidenheim (DE); Vogelsang, Klaus, 74564 Crailsheim (DE); Heilinger, Peter, 74564 Crailsheim (DE); Möller, Heribert, 91623 Sachsen (DE); Gebhardt, Hans, 90579 Langenzenn (DE)
(74) Vertreter: Weitzel, Wolfgang, Dr.-Ing.

(57) **Zusammenfassung**

Die Erfindung betrifft eine Antriebseinheit, insbesondere für ein Kraftfahrzeug
mit einem Verbrennungsmotor und einem Getriebe;
mit einem Flüssigkeits-Kühlkreislauf;
mit einer Kühlflüssigkeitspumpe;
mit einem Lüfter;
die Pumpe ist innerhalb eines Raumes angeordnet, der auf drei Seiten begrenzt ist durch die der Pumpe zugewandte Stirnwand des Kurbelgehäuses bzw. an eine Stirnwand des Kurbelgehäuses angebauten Zwischengehäuses, ferner durch die zur Kurbelwelle parallele Lüfterwelle, sowie durch die Hinterkante des Lüfterrades;
die Pumpe befindet sich - in einer Ansicht von vorn - im wesentlichen innerhalb des Flugkreises des Lüfterrades;
die genannte Stirnwand des Kurbelgehäuses bzw. eines Zwischengehäuses bilden das Spiralgehäuse der Pumpe.

## Beschreibung

Die Erfindung betrifft eine Antriebseinheit, insbesondere für ein Kraftfahrzeug, mit einem Verbrennungsmotor und einem Getriebe, ferner mit einem Flüssigkeits-Kühlkreislauf sowie mit einem Drehschwingungsdämpfer. Antriebseinheiten dieser Art sind aus zahlreichen Druckschriften bekannt geworden. Es wird beispielsweise verwiesen auf
(1) DE 37 13 580 C1
(2) US 3 720 372
(3) DE 33 01 560
(4) US 3 650 358
(5) DE 44 40 163

Bei diesen Antriebseinheiten fällt an verschiedenen Stellen während des Betriebes Wärme an, die abgeführt werden muß. Eine solche Wärmequelle stellt der Retarder dar, der bei Bremsung aus hoher Fahrgeschwindigkeit kinetische Bremsenergie aufnimmt und in Wärme umsetzt. Gemäß Dokument (1) kann die im Retarder an die Bremsflüssigkeit übergegangene Wärme mittels eines speziellen Wärmetauschers dem Kühlmittel oder der Umgebungsluft zugeführt werden.

Eine weitere Wärmequelle stellt der Antriebsmotor dar, dessen Wärmeabfuhr von entscheidender Bedeutung ist. Bei der Antriebseinheit gemäß Dokument (4) wird das Kühlmittel, das den Motor kühlt, zugleich als Betriebsflüssigkeit für den Retarder verwendet.

Die üblichen Drehschwingungsdämpfer umfassen u.a. einen massebehafteten Ring, der einen möglichst großen Durchmesser hat und der sich innerhalb eines Gehäuses befindet, das mit einem hochviskosen Silikonöl ausgefüllt ist. Solche Drehschwingungsdämpfer werden üblicherweise mit Luft gekühlt.

Bei der Konstruktion von Antriebseinheiten ist man ganz allgemein um eine möglichst kompakte Bauweise bemüht. Die Tendenz geht dahin, Bauteile einzusparen und die ganze Einheit kleiner und kostengünstiger zu gestalten. Hierbei wurden Fortschritte erzielt, die aber noch nicht ausreichen.

Der Erfindung liegt die Aufgabe zugrunde, eine Antriebseinheit mit einem Motor, einem Getriebe, einem Flüssigkeits-Kühlkreislauf mit Kühlflüssigkeitspumpe und einem Drehschwingungsdämpfer sowie gegebenenfalls weiteren Elementen derart zu gestalten, daß ein geringerer Bauraum, insbesondere eine geringere axiale Baulänge sowie ein geringeres Gewicht erzielbar sind als bei bekannten Antriebseinheiten.

Diese Aufgabe wird durch die Merkmale von Anspruch 1 gelöst.

Der wesentliche Gedanke der Erfinder besteht somit darin, den Drehschwingungsdämpfer einer solchen Antriebseinheit im Flüssigkeits-Kühlkreislauf anzuordnen. Dies bedeutet, daß die Kühlflüssigkeit des ohnehin vorhandenen Flüssigkeits-Kühlkreislaufes dazu ausgenutzt wird, auch den Drehschwingungsdämpfer zu kühlen.

Der Gedanke läßt sich auf unterschiedliche Weise verwirklichen. So kann der Drehschwingungsdämpfer beispielsweise im Kurbelgehäuse angeordnet werden. Wird er außerhalb des Kurbelgehäuses angeordnet, so kann das Leitungssystem derart gestaltet und angeordnet werden, daß die Kühlflüssigkeit in die unmittelbare Nähe des Gehäuses des Drehschwingungsdämpfers geführt wird, so daß es zu einem Wärmeaustausch kommen kann.

Gemäß einem weiterführenden Gedanken kann der Drehschwingungsdämpfer außer seiner angestammten Funktion noch mit weiteren Funktionen ausgestattet werden. So kann er beispielsweise auf einer seiner Stirnflächen als Pumpenrad für die Kühlflüssigkeit gestaltet werden bzw. ein Pumpenrad tragen. Alternativ oder zusätzlich kann eine seiner Stirnflächen als Rotorschaufelrad eines Retarders ausgebildet werden.

Die Erfindung ist anhand der Zeichnung näher erläutert. Darin ist im einzelnen folgendes dargestellt:
Figur 1 zeigt eine Antriebseinheit in einer schematischen Darstellung.
Figur 2 zeigt die Antriebseinheit gemäß Figur 1 mit Blickrichtung auf die Motorachse und zugleich auf jene Seite, auf der sich der Lüfter befindet.
Figur 3 zeigt wesentliche Teile der Antriebseinheit gemäß Figur 2 in einem Axialschnitt.

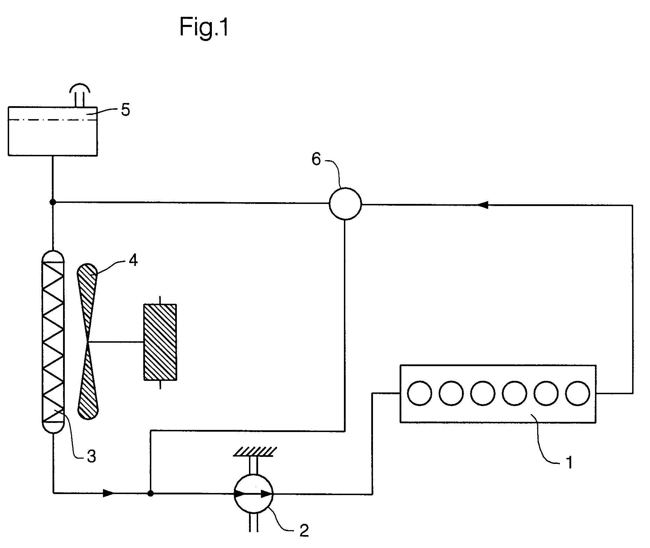

Die in Figur 1 dargestellte Antriebseinheit weist einen Verbrennungsmotor 1 auf. In dem hier dargestellten Flüssigkeits-Kühlkreislauf befinden sich eine Kühlflüssigkeitspumpe 2, ein Kühler 3, ein Lüfter 4, ein Ausgleichsbehälter 5 sowie ein Thermostat 6.

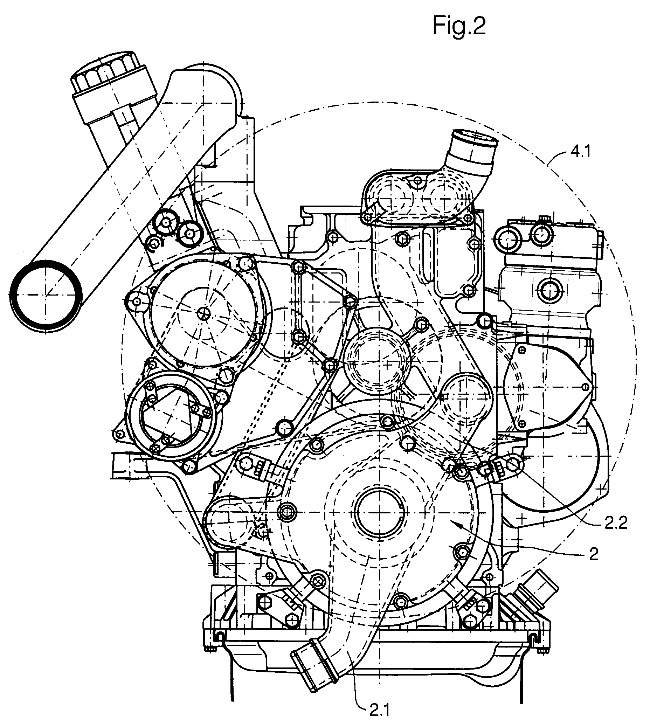

In Figur 2 sind die folgenden Bauteile erkennbar:
Die Kühlflüssigkeitspumpe 2, eine Saugleitung 2.1 und eine weitere Saugleitung 2.2. Ferner erkennt man den Flugkreis 4.1 des Lüfters.

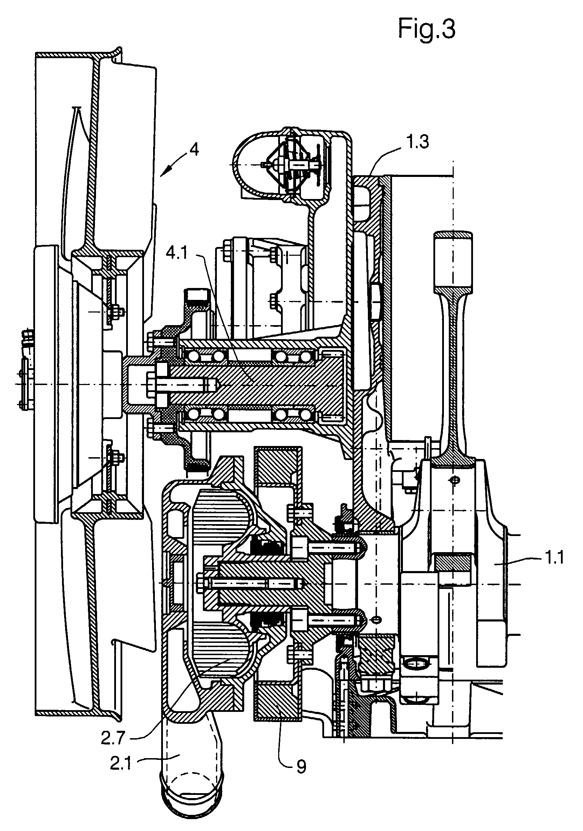

Figur 3 läßt im einzelnen folgendes erkennen:
Die Kurbelwelle 1.1 des Motors 1, ein Pumpenrad 2.7 der Kühlflüssigkeitspumpe, den Lüfter 4 mit der Lüfterwelle 4.1. In einem Deckelkörper ist die Saugleitung 2.1 untergebracht - siehe Figur 2. Man erkennt weiterhin einen Drehschwingungsdämpfer 9.

## Patentansprüche

1. Antriebseinheit, insbesondere für ein Kraftfahrzeug
1.1 mit einem Verbrennungsmotor und einem Getriebe;
1.2 mit einem Flüssigkeits-Kühlkreislauf;
1.3 mit einer Kühlflüssigkeitspumpe;
1.4 mit einem Lüfter;
1.5 die Pumpe ist innerhalb eines Raumes angeordnet, der auf drei Seiten begrenzt ist durch die der Pumpe zugewandte Stirnwand des Kurbelgehäuses bzw. an eine Stirnwand des Kurbelgehäuses angebauten Zwischengehäuses, ferner durch die zur Kurbelwelle parallele Lüfterwelle, sowie durch die Hinterkante des Lüfterrades;
1.6 die Pumpe befindet sich - in einer Ansicht von vorn - im wesentlichen innerhalb des Flugkreises des Lüfterrades;
1.7 die genannte Stirnwand des Kurbelgehäuses bzw. des Zwischengehäuses bilden das Spiralgehäuse der Pumpe.

2. Antriebseinheit nach Anspruch 1, dadurch gekennzeichnet, daß das Pumpenlaufrad auf der Kurbelwelle oder deren Verlängerung angeordnet ist.

3. Antriebseinheit nach Anspruch 2, dadurch gekennzeichnet, daß das Pumpenlaufrad fliegend gelagert ist.

4. Antriebseinheit nach einem der Ansprüche 1 bis 3, dadurch gekennzeichnet, daß Maßnahmen getroffen sind, damit der Betreiber die Pumpe gegen einen Retarder austauschen kann.

5. Antriebseinheit nach einem der Ansprüche 1 bis 4, gekennzeichnet durch die folgenden Merkmale:
5.1 die Pumpe hat wenigstens zwei Anschlüsse, nämlich einen Sauganschluß und einen Druckanschluß;
5.2 dem genannten Sauganschluß sind entsprechende Anschlüsse zum Flüssigkeitskühler und zum Kurbelgehäuse und/oder zu einem entsprechenden Zwischengehäuse bzw. Thermostatkreislauf zugeordnet;
5.3 dem Druckanschluß sind entsprechende Anschlüsse am Kurbelgehäuse und/oder am Zwischengehäuse zugeordnet.

6. Antriebseinheit nach einem der Ansprüche 1 bis 5, dadurch gekennzeichnet, daß das Spiralgehäuse im Pumpengehäuse angeordnet ist.

7. Antriebseinheit nach einem der Ansprüche 1 bis 6, dadurch gekennzeichnet, daß das Pumpenlaufrad im Pumpengehäuse gelagert ist.

8. Antriebseinheit nach einem der Ansprüche 1 bis 7, dadurch gekennzeichnet, daß der Antrieb der Pumpe ein Riementrieb oder ein Zahnradtrieb ist.
